# EUROPEAN PATENT APPLICATION

(11) **EP 4 428 168 A1**
(43) Date of publication of application: **11.09.2024**
(21) Application number: 23160823.3
(22) Date of filing: 08.03.2023
(51) Int. Cl.: C08G 18/08, C08G 18/32, C08G 18/42, C08G 18/67, C09D 175/06, C08G 18/73

(54) **POLYURETHANE/OLIGOMERIC URETHANE SYNTHESIS METHOD BY RADIATION**

(71) Applicant: CHT Turkey Kimya Sanayi ve Ticaret A.S., Istanbul (TR)
(72) Inventor: AKBULUT, Hüseyin, Istanbul (TR); ÇEL KBA , Sena, Istanbul (TR); ENADA, Seher, Istanbul (TR); U AKLI, Müge, Istanbul (TR); DEM RBAY, Duygu, Istanbul (TR)
(74) Representative: Yavuzcan, Alev

(57) **Abstract**

In particular, the invention relates to the synthesis of radiation-curable polyurethane/oligomeric urethane dispersions of anionic and cationic characters, containing neutralization techniques characterized by the selection of counter ions as monomers and/or agents which can be polymers acting as promoters under radiation, to a radiation polyurethane/oligomeric urethane synthesis method that enables the creation of radiation curable binder systems without using cosolvents, surfactants, emulsifiers, defoamers, stabilizers and additives, wherein all components of the radiation-curable binder systems can be polymerized.

## Description

### Technical Field

The invention relates to a method for synthesizing polyurethane/oligomeric urethane by radiation, which enables the synthesis of radiation-curable polyurethane/oligomeric urethane dispersions having anionic and cationic characters.

In particular, the invention relates to the synthesis of radiation-curable polyurethane/oligomeric urethane dispersions of anionic and cationic characters, containing neutralization techniques characterized by the selection of counter ions as monomers and/or agents which can be polymers acting as promoters under radiation, to a radiation polyurethane/oligomeric urethane synthesis method that enables the creation of radiation curable binder systems without using cosolvents, surfactants, emulsifiers, defoamers, stabilizers and additives, wherein all components of the radiation-curable binder systems can be polymerized.

### State of the Art

Water-based coating systems are preferred in many industrial applications because they are environmentally sensitive and harmless. Conventional water-based systems require a high temperature thermal curing process and energy consumption is high. These systems include polyurethane dispersions or acrylic emulsions, cosolvents, emulsifiers, other necessary additives according to different types of applications to obtain stable dispersions or emulsions. However, the additives required to produce water-based systems often have a negative impact on polymeric film properties, appearance and durability. Another negative situation in water-based systems is the limited crosslinking rate within the polymeric structure due to the loss of stability in the dispersion or emulsion if crosslinking is excessive.

Radiation curable compositions which are developed as a solution to these negative effects, do not suffer from these limitations and at the same time offer highly saleable compositions, excellent adhesion, superior water and solvent resistance, mechanical strength, durability, flexibility, transparency, high gloss (as a polish) and very long shelf life. The main reason behind achieving these superior properties is that water-based radiation curable systems are based on low molecular weight polymeric structures containing oligomeric or multi-functional polymerizable groups. Under a suitable radiation exposure, the highest rate of crosslinking between polymer chains is possible without high temperature thermal curing and bonding step. For this reason, the use of radiation curable systems as an alternative to conventional thermal drying and curing processes is rapidly increasing.

Water-based ultraviolet (UV) curable systems in current applications are mainly based on the emulsion of a water-insoluble (or soluble) multi-acrylate/methacrylate functional structure in the form of a monomer, oligomer or polymer. In particular, the use of water-insoluble structures, emulsifiers and other additives for the preparation of stable products plays an important role. However, any additional additives other than polymerizable structures in the composition have a negative impact on the transparency, physical properties and photo-polymerization of the cured film. In addition, free monomers and non-polymeric structures in the product pose an obstacle to compliance with the regulation in the textile and food industry. For radiation curable water-based systems, there are only two options for dispersion preparation. In anionic or cationic urethane dispersions, carboxyl acid-functionalized diol (2-Bis(hydroxymethyl)propionic acid, etc.) or tertiary amine diol (N-Methyldiethanolamine, etc.) must be attached to the urethane-bound host polymeric structure, respectively. This method requires the use of solvents, cosolvents and emulsifiers, resulting in an increase in the ratio of urethane bonds/hydrogen bonds in the structure and an increase in viscosity. However, if high molecular weight polyols are used to reduce the urethane bonds, the proportion of polymerizable end groups and the reactivity of the polymer decreases. For all these reasons, there is a need to develop solution techniques for the preparation of UV curable polyurethane dispersions with low molecular weight, well-defined structural form, appropriate particle size and transparency.

A patent document US2009162564A1 in the known state of the art, discloses a method for producing a coating having a rapidly hardening surface. In said method, 0-60 wt% of a polymeric polyester polyol, 5-40 wt% of at least one compound comprising both isocyanate reactive groups and meth (acrylate) groups (wherein said compound comprises 1-30 wt% of at least one hydroxyl alkyl acrylate), 1-15 wt% of at least one compound comprising both isocyanate reactive groups and carboxyl groups, 10-50 wt% of at least one isocyanate functional group; and optionally at least one photo-initiator comprising at least one amine extender compound at 0.1-10 wt% and optionally at least one isocyanate reactive group at 0.1-10 wt%. The method of producing coatings with a fast-curing surface, which can be applied on a wide variety of substrates such as plastic, metal and wood, involves applying a curable coating composition to a substrate and curing it by radiation. Any type of radiation such as UV, electron, X-ray or gamma radiation can be used for this process. UV curing is initiated in the presence of photoinitiators. Aromatic ketone compounds such as benzophenones, alkylbenzophenones, Michler ketone, anthrone and halogenated benzophenones can be used as photoinitiators. These photoinitiators usually contain at least one isocyanate reactive group so that the light initiator can be incorporated directly into the isocyanate backbone. If the curing process uses free radicals, water-soluble peroxides or aqueous emulsions of water-insoluble initiators may be suitable. The polyurethane dispersions according to the invention can be used as a single lacquer binder or can be compared or combined with binders, auxiliaries and additives known in lacquer technology, such as dispersions, pigments and dyes. Said polyurethane dispersions generally require a solvent diluent. The document does not disclose neutralization techniques that are characterized by the selection of counter ions as monomers and/or agents that can be polymers that act as promoters under irradiation, also there is no mention of a solution for the synthesis of radiation curable polyurethane/oligomeric urethane dispersions with anionic and cationic characteristics and the creation of radiation curable binder systems with all components polymerizable and without the need for cosolvents, surfactants, emulsifiers, defoamers, stabilizers and other additives.

Another patent document CN101418147A of the prior art discloses a preparation method using a dual curing system which has a water-dilutable coating composition and ultraviolet-thermal for this composition. The coating composition of the double curing process includes 3.5-60% water dilutable urethane acrylate oligomer, 17-47% water dilutable polyurethane polyol, 20-49% water dilutable curing agent, 0.4-9% photo-initiator and 0.4-1.6% auxiliary components by weight. The coating with double curing process can be completed in as little as 10-30 seconds in ultraviolet curing and between 1 and 3 minutes in thermal curing. In the method, the polyurethane acrylate oligomer containing an ethylenic structure is rapidly solidified into a polymer network under ultraviolet light, the hydroxyl group in the polyurethane polyol oligomer and the curing agent component are further thermally polymerized in the same coating film to form a permeable internal network structure. This double mesh not only improves adhesion but also increases stiffness. The document does not disclose neutralization techniques that are characterized by the selection of counter ions as monomers and/or agents that can be polymers that act as promoters under irradiation, also there is no mention of a solution for the synthesis of radiation curable polyurethane/oligomeric urethane dispersions with anionic and cationic characteristics and the creation of radiation curable binder systems with all components polymerizable and without the need for cosolvents, surfactants, emulsifiers, defoamers, stabilizers and other additives.

As a result, there is a need to develop a radiation polyurethane/oligomeric urethane synthesis method that enables the synthesis of radiation-curable polyurethane/oligomeric urethane dispersions with anionic and cationic characters and the formation of radiation-curable binder systems with all components polymerizable and without using cosolvents, surfactants, emulsifiers, defoamers, stabilizers and other additives.

### Purpose of the Invention

The present invention relates to a method for synthesizing polyurethane/oligomeric urethane by radiation, which meets the above-mentioned requirements, eliminates possible disadvantages and provides some additional advantages.

The main object of the inventive method of synthesizing polyurethane/oligomeric urethane by radiation is to obtain an radiation polyurethane/oligomeric urethane synthesis method that enables the synthesis of polyurethane/oligomeric urethane dispersions that have anionic and cationic characters and can be cured by irradiation and forming radiation curable binder systems with all components of which can be polymerized and without using cosolvents, surfactants, emulsifiers, defoamers, stabilizers and other additives.

Another object of the invention is to obtain a method of synthesizing polyurethane/oligomeric urethane by radiation, which enables the synthesis of additive-free anionic polyurethane dispersions by synthesizing carboxyl acid-functionalized polyol species, improving the viscosity and transparency of the dispersion and the polymer film.

Another object of the invention is to provide an radiation polyurethane/oligomeric urethane synthesis method that enables the production of ultraviolet (UV) curable cationic polyurethane dispersions without the use of additives and solvents by combining polymerizable regions and monohydroxy functional tertiary amines within the same polymeric structure and improving the structure formation.

Another object of the invention is to provide a method for synthesizing polyurethane/oligomeric urethane by radiation, which enables the chemical bonding of hydroxy-functionalized photoinitiators to the main polymeric structure comprising carboxylic acid-functionalized polyols, resulting in anionic compositions providing polyurethanes containing polymerizable regions and photo-initiators within the same polymeric structure.

Another object of the invention is to provide a method of synthesizing polyurethane/oligomeric urethane by radiation, which enables anionic and cationic ultraviolet (UV) curable dispersion to be obtained by neutralizing carboxylic acid groups in the anionic system and tertiary amine groups in the cationic system with polymerizable acidic monomers or tertiary amine functional monomers.

A further object of the invention is to provide a method of synthesizing polyurethane/oligomeric urethane by radiation, whereby oppositely charged ionic interactions establish strong bonding between the polymeric chains and hydrogen bonds from the urethane linkages, resulting in all polymerizable blend combinations after curing and increasing reactivity by the tertiary amine contents in all dispersions acting as a photopolymerization promoter.

Another object of the invention is to provide a method of synthesizing polyurethane/oligomeric urethane by radiation, which allows to increase the reactivity of radiation-curable binders without additives, the clarity of the films obtained and to control the physical properties of the film by varying the amount of substances in the composition.

Another object of the invention is to provide a method of synthesizing polyurethane/oligomeric urethane by radiation which improves polymeric film properties and appearance, photopolymerization, increases polymer reactivity and robustness, and prevents limited cross-linking within the polymeric structure due to loss of stability in the dispersion or emulsion.

Another object of the invention is to provide a method of synthesizing polyurethane/oligomeric urethane by radiation, which allows to accelerate the formation of film formation under irradiation exposure by increasing the reactivity of the compositions and to control the physical properties of the dispersion and film obtained by changing the component ratios.

In order to achieve the above objectives in the most general form, it is aimed to synthesize radiation-curable polyurethane/oligomeric urethane dispersions and water-based coating system with anionic and cationic character, to synthesize radiation-curable binder systems with cosolvent, surfactant, emulsifier, defoamer, the method of synthesizing polyurethane/oligomeric urethane by irradiation, which allows the formation of polyurethane/oligomeric urethane without the need for stabilizers and additives, neutralizing carboxylic acid-functionalized polyols in anionic dispersion with tertiary amine-containing agents or monomers that act as photo-polymerization promoters; increasing the reactivity of the coating system by neutralizing hydroxy-functionalized tertiary amines, which act as photo-polymerization promoters in the cationic dispersion, with carboxylic acid-functionalized polymerizable monomers.

The structural and characteristic features and all advantages of the invention will be more clearly understood by means of the figures given below and the detailed description written by making references to these figures, and therefore, the evaluation should be made by considering these figures and detailed description.

### Detailed Description of the Invention

In this detailed description, the preferred embodiments of the inventive method of synthesizing polyurethane/oligomeric urethane by radiation are described only for a better understanding of the subject matter.

The present invention provides a method of synthesizing polyurethane/oligomeric urethane by radiation which enables to synthesize radiation curable, preferably ultraviolet (UV) radiation curable polyurethane/oligomeric urethane dispersions which has anionic and cationic characters and water-based coating system, also enables to form radiation curable binder systems in which all components are polymerizable and without the use of cosolvent, surfactant, emulsifier, defoamers, stabilizers and additives, neutralizing carboxylic acid-functionalized polyols in anionic dispersion with tertiary amine-containing agents or monomers which act as photo-polymerization promoters; increasing the reactivity of the coating system by neutralizing hydroxy-functionalized tertiary amines, which act as photo-polymerization promoters in the cationic dispersion, with carboxylic acid-functionalized polymerizable monomers.

In an exemplary embodiment of the radiated polyurethane/oligomeric urethane synthesis method developed with the present invention, all polymer dispersions in anionic and cationic applications contain tertiary amine as a neutralization agent in the anionic system or as a reaction component in the cationic system. Tertiary amines in the radiation curable system can be considered as polymerization promoters. For this reason, all radiation (ultraviolet) curable polyurethane dispersions contain tertiary amine promoters that increase the reactivity of the system.

Additive-free UV radiation curable coating describes the surprising finding of present invention is that final components of obtained dispersions consist of all polymerizable structures under the ultraviolet irritation. By that, it is intended to mean that coatings for which the cross linkable materials are dissolved in a solvent just water.

In a preferred embodiment of the invention, the method for synthesizing polyurethane/oligomeric urethane by radiation mentioned comprises the steps of obtaining carboxylic acid functional polyols by carrying out esterification reactions between the water-insoluble polyol and di-functional activated carboxylic acid species which are di-anhydrates. The process of obtaining these carboxylic acid functionalized polyols is shown in Graph-1.

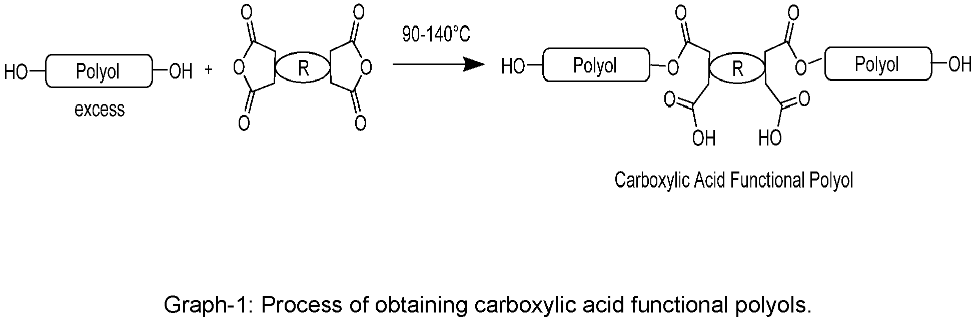

Proper adjustment of temperature in esterification reaction with di-anhydride derivatives and polyols is an important factor for obtaining suitable carboxylic acid functional polyols. Sterically unhindered hydroxy terminated polyol derivatives can react with di-anhydride derivatives relatively lower temperature range from 90C to 120C but at the same time secondary or sterically hindered alcohol functional polyols can only react at temperature range from 120 to 140°C. If reaction temperature or time is excessive than needed, side reactions with unreacted carboxylic acid groups can cause to crosslinked polymer formation.

In another preferred embodiment of the invention, the method for synthesizing polyurethane/oligomeric urethane by radiation mentioned above, comprises the steps of using polyols, monohydroxy-functional polymerizable monomers and di-isocyanate; the carboxylic acid groups of the polyols provide a catalytic effect in the reaction between the isocyanate and the hydroxy groups to form urethane bonds; in the polymerization reaction, the monohydroxy functional monomers react with the di-functional isocyanate to act as chain growth inhibitors and all components are converted into well-defined polymerizable forms to obtain a catalyst and solvent free, radiation curable anionic polyurethane dispersion. The synthesis process of this radiation curable anionic polyurethane dispersion is shown in Graph 2.

In present invention, a one-step preparation reaction is preferred for the synthesis of anionic UV curable polyurethane dispersions. Other conventional synthetic methods for polyurethane dispersions generally including the functionalization of polyols with isocyanates in first step and further, end-capping unreacted isocyanates with hydroxy or amino functional intermediates to achieve chain grow or finish the polymerization with desired functionality. However, this method is not sufficient to be utilized in the preparation of UV curable polyurethane dispersions in which low molecular weight, low viscosity, fluidity and exact structural modification are essential to achieve the highest ratio of polymerizable reactive groups corresponding to highest reactivity under the UV light exposure.

Specifically, polyols were selected from di-hydroxy terminated polyesters, polycaprolactone, polycarbonates, polyether's, polydimethylsiloxanes, polyethylene's, polybutadienes and similar polyol derivatives a molecular weight in the range of about 1000 to about 100000 Dalton and a melting point lower than 100°C but is not limited.

Di-functional activated carboxylic acids were selected from Di-anhydride derivatives such as 3,3',4,4'-Benzophenonetetracarboxylic dianhydride, 4,4'-Biphthalic Anhydride, 3,4,9,10-Perylenetetracarboxylic 3,4:9,10-dianhydride, Cyclobutane-1,2,3,4-tetracarboxylic dianhydride, 3,3',4,4'-Biphenyltetracarboxylic dianhydride, Benzophenone-3,3',4,4'-tetracarboxylic dianhydride, Bicyclo[2.2.2]oct-7-ene-2,3,5,6-tetracarboxylic dianhydride, 1,4,5,8-Naphthalenetetracarboxylic dianhydride, Tetrahydrofuran-2,3,4,5-tetracarboxylic Acid, Pyromellitic dianhydride, Perylene-3,4,9,10-tetracarboxylic dianhydride, 4,4'-Oxydiphthalic anhydride, 4,4'-(4,4'-lsopropylidenediphenoxy)bis(phthalic anhydride), and all related dianhydride derivatives but is not limited.

The molar ratio of polyol and di-anhydride derivatives was adjusted in mol Hydroxy: mol Anhydride equal to about 2 or less. It is essential that molar ratio of hydroxy groups is limited to maximum 2 since final carboxylic acid functional polymer should have enough number of hydroxy groups for further polymerization and the deterioration of this ratio can lead to increase in molecular weight with higher polydispersity index due to the lack of selectivity in reaction.

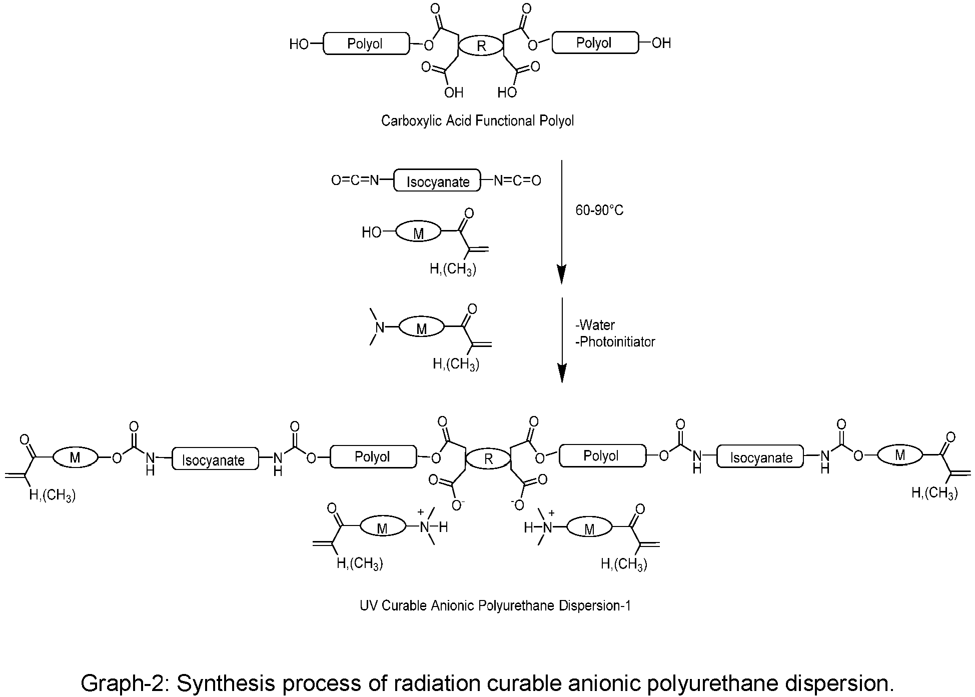

Anionic version of dispersions in present invention is achieved with two different synthetic methods. The general reaction path for first method is depicted in Graph-2 showing the preparation of UV Curable Anionic Polyurethane Dispersion-1. The general reaction path for second method illustrated in Graph-3 is based on the idea of preparation of UV curable anionic polyurethane dispersion-2.

The method of synthesizing polyurethane/oligomeric urethane by radiation said in another preferred embodiment of the invention comprises the step of synthesizing a radiation curable anionic polyurethane dispersion by using a photo-initiator as a post-reaction additive in a catalyst-free polyurethane system or by replacing some of the hydroxy-functional polymerizable monomers with hydroxy-functional photo-initiators and attaching the photo-initiators to the main polymeric structure. The process of synthesizing radiation-curable anionic polyurethane dispersion by replacing these hydroxy-functionalized polymerizable monomers with photoinitiators is shown in Graph-3.

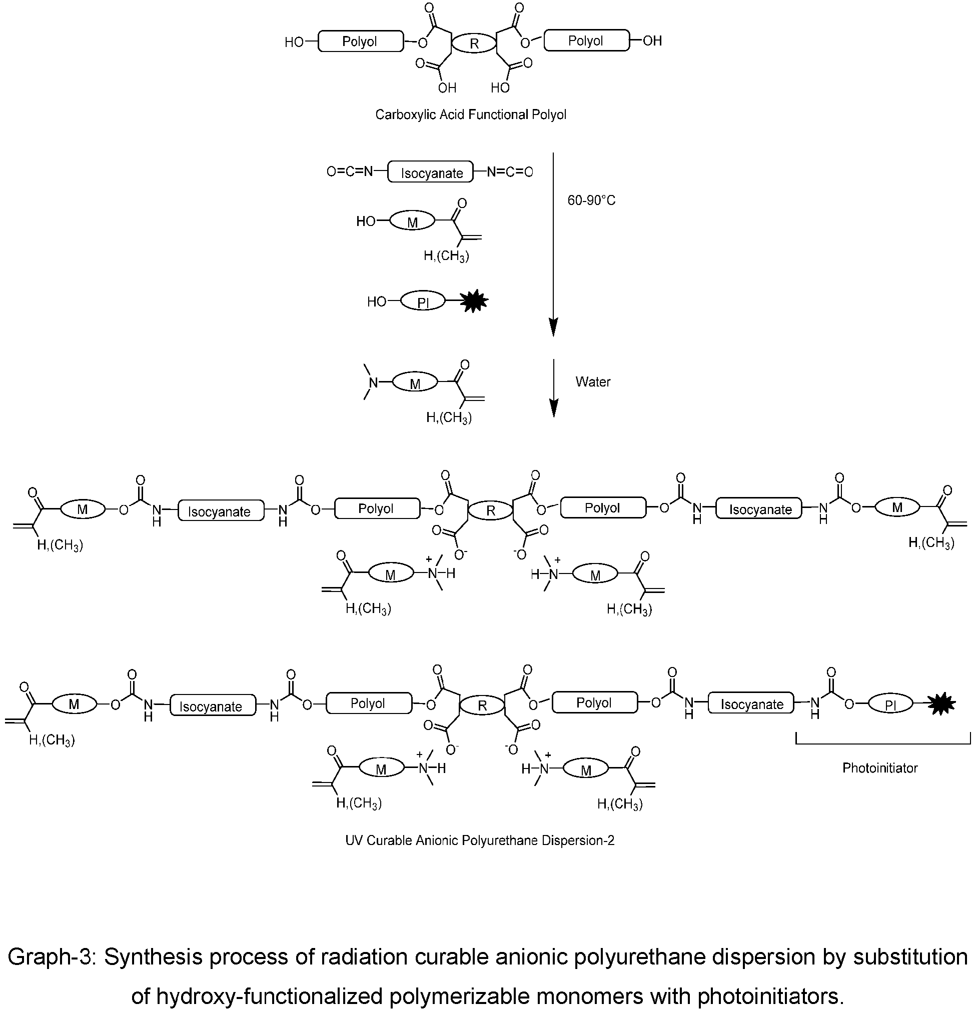

In another preferred embodiment of the invention, the method of synthesizing polyurethane/oligomeric urethane by radiation comprises the step of obtaining a cationic polyurethane dispersion which is catalyst and solvent free, radiation curable, cationic polyurethane dispersion using water insoluble polyols, di-isocyanate, hydroxy functional polymerizable monomers and hydroxy functional tertiary amines.

In another preferred embodiment of the invention, the method of synthesizing polyurethane/oligomeric urethane by radiation comprises the step of evaporating the water in the dispersion without the need for heat drying and rapidly forming the film formation by increasing the reactivity of all compositions by exposure under ultraviolet (UV) light.

In the synthesis of anionic and cationic UV curable polyurethane dispersion, preferred diisocyanate functional agents are selected from mainly commercially available isocyanates such as Hexamethylene diisocyanate, Isophorone diisocyanate, Toluene 2,4-diisocyanate, 1,3-Phenylene diisocyanate, Diphenylmethane 4,4'-diisocyanate, Tolylene-2,4-diisocyanate, Tolylene-2,6-diisocyanate, 1,4-Phenylene diisocyanate, m-Xylylene diisocyanate, trans-1,4-Cyclohexylene diisocyanate, Polypropylene glycol), tolylene 2,4-diisocyanate terminated, 3,3'-Dimethyl-4,4'-Biphenyl Diisocyanate, 1,4-Diisocyanatobutane, 1,12-Diisocyanatododecane, Tolylene-2,6-diisocyanate, 2-Methyl-m-phenylene diisocyanate, 1,3-Bis(1-isocyanato-1-methylethyl)benzene, 1,3-Bis(isocyanatomethyl) cyclohexane and all related di-isocyanate and di-isocyanate functional polymer derivatives but is not limited.

The main UV active components for the obtained polymerizable structures in the anionic and cationic UV curable polyurethane dispersions were selected from hydroxy functional polymerizable monomers such as Hydroxyethyl acrylate, Hydroxyethyl methacrylate, N-Hydroxyethyl acrylamide, N-Hydroxyethyl metacrylamide, 2-hydroxypropyl acrylate, 2-hydroxypropyl methacrylate, Hydroxypropyl acrylate Hydroxypropyl methacrylate, 3-Phenoxy 2 hydroxy propyl methacrylate, 3-Phenoxy 2 hydroxy propyl acrylate, Glycerol monomethacrylate, Glycerol monoacrylate, N-(2-Hydroxypropyl)methacrylamide, N-(2-Hydroxypropyl) acrylamide, 4-hydroxybutyl acrylate, 4-hydroxybutyl methacrylate and all related mono, di or multi acrylate/methacrylate and mono hydroxy functional polymerizable monomers but is not limited.

The UV curable compositions of the present invention are capable of undergoing polymerization reaction by UV light exposure in the presence of non-limiting photoinitiator examples such as Michler's ketone, anthraquinone, acridine, phenazine, benzophenone, Rose Bengal, Eosine, Erythrosine, Hexaarylbiimidazole, p-dialkylamino benzylidene ketone, 3-ketocoumarin, 4-thiazolidinone, 1-indanone, Riboflavin, Eosin-Y, Carboxylated Camphorquinone Acetophenone, Anisoin, Anthraquinone, Anthraquinone-2-sulfonic acid, sodium salt monohydrate, (Benzene) tricarbonylchromium, Benzil, Benzoin, Benzoin ethyl ether, Benzoin isobutyl ether, Benzoin methyl ether, Benzophenone, Benzophenone/1-Hydroxycyclohexylphenyl ketone, 1-Hydroxycyclohexyl phenyl ketone, 3,3',4,4'-Benzophenonetetracarboxylic dianhydride, 4-Benzoylbiphenyl, 2-Benzyl-2-(dimethylamino)-4'-morpholinobutyrophenone, 4,4'-Bis(diethylamino)benzophenone, 4,4'-Bis(dimethylamino)benzophenone, Camphorquinone, 2-Chlorothioxanthen-9-one, (Cumene) cyclopentadienyliron(II) hexafluorophosphate, Dibenzosuberenone, 2,2-Diethoxyacetophenone, 4,4'-Dihydroxybenzophenone, 2,2-Dimethoxy-2-phenylacetophenone, 4-(Dimethylamino)benzophenone, 4,4'-Dimethylbenzil, 2,5-Dimethylbenzophenone, 3,4-Dimethylbenzophenone, Diphenyl(2,4,6trimethylbenzoyl)phosphine oxide / 2-Hydroxy-2-methylpropiophenone, 4'-Ethoxyacetophenone, Diphenyl(2,4,6 trimethylbenzoyl)phosphine oxide, Ethylanthraquinone, Ferrocene, 3'-Hydroxyacetophenone, 4'-Hydroxyacetophenone, 3-Hydroxybenzophenone, 4-Hydroxybenzophenone, 1-Hydroxycyclohexyl phenyl ketone, 2-Hydroxy-2-methylpropiophenone, 2-Hydroxybenzophenone, 3-Methylbenzophenone, Methybenzoylformate, 2-Methyl-4'-(methylthio)-2-morpholinopropiophenone, Phenanthrenequinone, 4'-Phenoxyacetophenone, Thioxanthen-9-one, Triarylsulfonium hexafluoroantimonate salts, Triarylsulfonium hexafluorophosphate salts, 2-Hydroxy-2-methyl-1- phenyl-1-propanone, 2-Hydroxy-1-[4-(2-hydroxyethoxy)phenyl]-2-methyl-1-propanone, Methylbenzoylformate, oxy-phenyl-acetic acid 2-[2 oxo-2 phenyl-acetoxy-ethoxy]-ethyl ester and oxy-phenyl-acetic 2-[2-hydroxy-ethoxy]-ethyl ester, Alpha, alpha-dimethoxy-alpha-phenylacetophenone, 2-Benzyl-2-(dimethylamino)-1-[4- (4-morpholinyl) phenyl]-1-butanone, 2-Methyl-1-[4-(methylthio)phenyl]-2-(4-morpholinyl)-1-propanone, Diphenyl (2,4,6-trimethylbenzoyl)- phosphine oxide, Phosphine oxide, phenyl bis (2,4,6-trimethyl benzoyl), Bis (eta 5-2,4-cyclopentadien-1-yl) Bis [2,6-difluoro-3-(1H-pyrrol-1-yl) phenyl]titanium, lodonium, (4-methylphenyl) [4-(2-methylpropyl) phenyl]- hexafluorophosphate(1-) and all possible mixture of photoinitiator and their modifications but it is not limited.

In this context, the photoinitiator attached polymeric structure can be considered as polymeric photoinitiator exhibits outstanding reaction performance under the UV radiation comparing to the first method above-mentioned. Main reason behind this surprising reactivity is the existence of polymerizable monomer and photoinitiator in the same polymeric structure, increasing the yield of polymerization and diminishing the ratio of unreacted photoiniator which is considerable eliminated. Also, the transparency of dispersion is perfectly improved, whereas, in the case of using especially water insoluble photoinitiator as post reaction additive, the transparency of dispersions and UV-cured films are considerable decreased. Additional advantage of this method is the elimination of free-photoinitiator in product can ensure compliance with regulations and certification programs especially in textile and food sectors wherein toxicity of some photoinitiators is critical problem in approval process.

In a further aspect of the present invention, UV curable cationic polyurethane dispersion is prepared with one-step production strategy illustrated in Graph-4. The one-step reaction provides sufficiently low viscosity, low molecular weight with low polydispersity, fluidity and exact structural modification are essential to achieve the highest ratio of polymerizable reactive groups corresponding to highest reactivity under the UV light exposure.

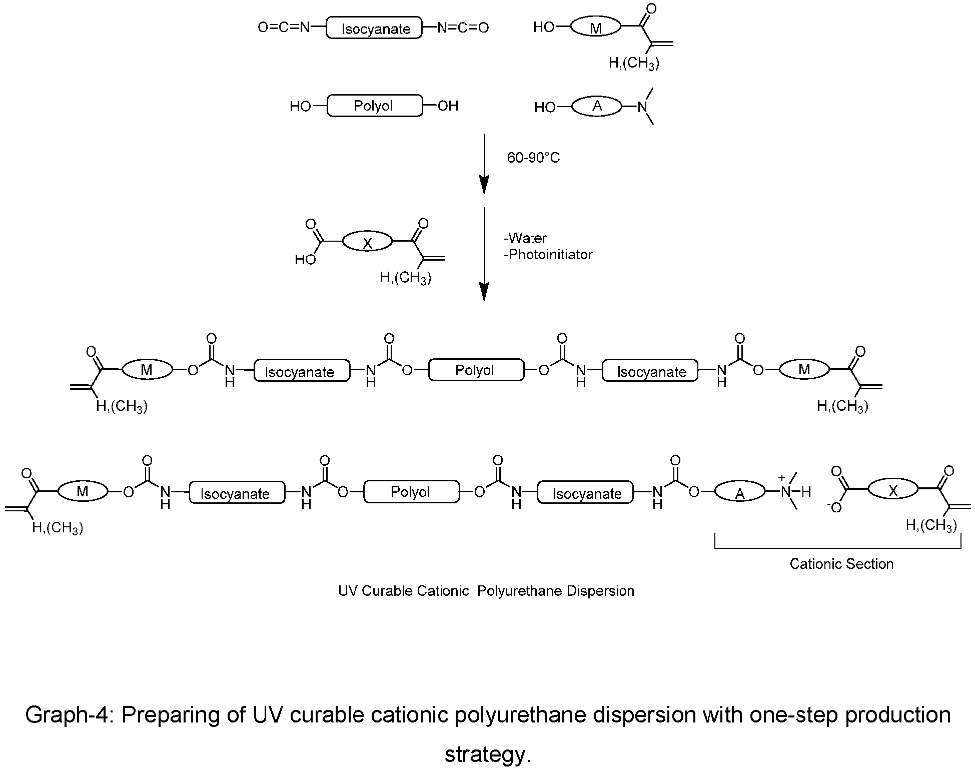

One of the critical findings of present invention for both the anionic and cationic UV curable polyurethane dispersions is the achieving neutralization step with polymerizable carboxylic acids or tertiary amines, leading the formation of oppositely charged crosslinked polyurethanes after UV curing application. More specifically, before UV curing, polymerizable carboxylic acids or tertiary amines behave as counter ion to provide water solubility for main polymers. However, after UV curing, the polymerization of neutralization agents and main polymers creates the combination of oppositely charged polymeric structures. Thus, final UV-cured polymers contain strong ionic bonds as well as hydrogen bonds coming from urethane linkages, totally changing the physical properties and binding ability of obtained UV curable polymers.

In preferred anionic and cationic embodiments, the neutralization are accomplished with polymerizable tertiary amine, carboxylic acids or other acids/bases such as 2-N-Morpholinoethyl methacrylate, 2-N-Morpholinoethyl acrylate, 2-Diisopropylaminoethyl methacrylate, 2-Diisopropylaminoethyl acrylate, N-[3-(N,N-Dimethylamino)propyl] methacrylamide, N-[3-(N,N-Dimethylamino)propyl] acrylamide, N-[2-(N,N-Dimethylamino)ethyl] methacrylamide, N-[2-(N,N-Dimethylamino)ethyl] acrylamide, 2-(N,N-Dimethylamino)ethyl acrylate, 2-(N,N-Dimethylamino)ethyl methacrylate, 2-(N,N-Diethylamino)ethyl methacrylate, 2-(N,N-Diethylamino)ethyl acrylate, 2-(tert-Butylamino)ethyl methacrylate, 2-(tert-Butylamino)ethyl acrylate, 2-(N,N-Dimethylamino)ethyl methacrylate, 2-(N,N-Dimethylamino)ethyl acrylate, Beta-Carboxyethyl Acrylate, Beta-Carboxyethyl methacrylate, 2-Sulfoethyl methacrylate, 2-Sulfoethyl acrylate, Acrylic acid, Methacrylic acid, Phosphorus-Based Poly(meth)acrylates and all related monomers but is not limited. It should be noted that all type of inorganic and organic acids and bases also can be used in neutralization step but is not limited.

As mentioned above, all compositions disclosed herein have tertiary amine contents which has promoter effect in photopolymerization, and all ionic parts in obtained polymers containing polymerizable neutralization agents and all compositions are additive-free creating better interactions between radiation curable moieties of main polymeric structure to give faster reaction. As a result of all these reasons, depending on the desired film thickness and power of the UVlamb in UV curing system, most of the compositions of the present invention can be cured and dried just by UV light exposure due the generated heat coming from fast polymerization and UVlamb is enough to evaporate water content. It should be noted that sun light regardless of the intensity, contain small portion of UV light, thus all compositions of the present invention can also be cured and dried under the sun light exposure.

The synthetic strategy disclosed in the present invention to produce UV curable anionic or cationic polyurethane dispersions can easily be diversified to limitless derivatives by changing the ratios and types of polyols, di-anhydrides, di-isocyanates, hydroxy functional tertiary amines or monomers, the type of neutralization agents and photoinitiators mentioned-above, the solid content of the obtained dispersions. Additionally, the diversification of products can also be achieved by mixing commercially available UV crosslinkers and other types of products and all compositions of the present invention can be polymerized using thermal radical initiator or redox polymerization technics.

### Example-1

### The Synthesis of Carboxylic Acid Functional Polyol:

100g of Randomly selected commercially available Polyester-based Polyol (Mw=1000g/mol, OH value= 112 mgKOH/g, Mp=50°C) and 14.5g of 4,4'-Biphthalic Anhydride were stirred and heated to 120°C under the inert atmosphere about 2 hours. Final polymer was analyzed by FTIR to observe the anhydride peaks until their total disappearance. Acid value for carboxylic acid functional polyester-based polyol was around 0.9 mmol Acid/g).

### Example-2

### The Production of UV Curable Anionic Polyurethane Dispersion-1:

100g of the carboxylic acid functional polyester-based polyol obtained in Example-1, 15,14g of Hexamethylene diisocyanate, 10.5g of Hydroxyethyl Acrylate stirred and heated to 90°C under the inert atmosphere about 1.5-2 hours until all isocyanate consumed. Reaction was followed by FTIR analysis. Then, reaction temperature was cooled down to 70°C and 12.9g of Dimethyl aminoethyl acrylate, 7g of 1-Hydroxy-cyclohexyl-phenyl-ketone was added to reaction mixture with 150g of water to disperse the obtained polymer. Solid Content=50%, Viscosity= 95 (mPa.s at 25°C).

### Example-3

### The Production of UV Curable Anionic Polyurethane Dispersion-2:

100g of the carboxylic acid functional polyester-based polyol obtained in Example-1, 15,14g of Hexamethylene diisocyanate, 8.1g of Hydroxyethyl Acrylate, 4.5g of 2-Hydroxy-4'-(2-hydroxyethoxy)-2-methylpropiophenone stirred and heated to 90°C under the inert atmosphere about 1.5-2 hours until all isocyanate consumed. Reaction was followed by FTIR analysis. Then, reaction temperature was cooled down to 70°C and 12.9g of Dimethyl aminoethyl acrylate was added to reaction mixture with 150g of water to disperse the obtained polymer. Solid Content=50%, Viscosity= 110 mPa.s at 25°C.

### Example-4:

### The Production of UV Curable Cationic Polyurethane Dispersion

100g of Randomly selected commercially available Polyester-based Polyol (Mw=1000g/mol, OH value= 112 mgKOH/g, Mp=50°C), 33,64g of Hexamethylene diisocyanate, 17,4g of Hydroxyethyl Acrylate, 4,5g of Dimethylethanolamine stirred and heated to 90°C under the inert atmosphere about 1-1.5 hours until all isocyanate consumed. Reaction was followed by FTIR analysis. Then, reaction temperature was cooled down to 70°C and 3,6g of Acrylic Acid, 5g of 1-Hydroxycyclohexyl-phenyl-ketone was added to reaction mixture with 164g of water to disperse the obtained polymer. Solid Content=50%, Viscosity= 120 (mPa.s at 25°C).

Thanks to the radiation polyurethane/oligomeric urethane synthesis method developed with the present invention, it is possible to synthesize radiation curable polyurethane/oligomeric urethane dispersions with anionic and cationic character and to form radiation curable binder systems, all components of which can be polymerized, without the need for cosolvents, surfactants, emulsifiers, defoamers, stabilizers and other additives. In addition, an effective, fast and functional radiation polyurethane/oligomeric urethane synthesis method is obtained, which allows to increase the reactivity of radiation-curable binders without additives, to increase the clarity of the obtained films and to control the physical properties of the film by changing the amount of substances in the composition, to improve photo-polymerization, to increase polymer reactivity and robustness, to prevent the limited cross-linking rate in the dispersion or polymeric structure.

The compositions of the present invention and their possible modifications, substitutions and derivatives as UV curable anionic/cationic Polyurethane dispersions have clear potential to find applications in the formulation of textile printing ink, and digital printing ink, binder and crosslinking system for textile, construction and any type of coating sectors and not intended to be exhaustive or to limit the invention to the precise forms or applications. Other possible embodiments of this invention will be apparent to those skilled in the art upon consideration of this finding or from practice of the invention disclosed herein. While certain features of the invention have been illustrated and described herein, many modifications, substitutions, changes the principles, and equivalents will now occur to those of ordinary skill in the art. It is, therefore, to be understood that the appended claims are intended to cover all such modifications and changes as fall within the true spirit of the invention.

## Claims

1. A method of synthesizing radiation-curable polyurethane/oligomeric urethane dispersions and water-based coating system with anionic and cationic characters, which enables to obtain radiation-curable binder systems without using cosolvents, surfactants, emulsifiers, defoamers, stabilizers and additives, wherein all components of the radiation-curable binder systems can be polymerized, the method comprising the steps of;
- neutralization of carboxylic acid functional polyols in anionic dispersion with monomers or tertiary amine-containing agents which act as a photo-polymerization promoter;
- increasing the reactivity of the coating system by neutralizing hydroxy functional tertiary amines which act as photo-polymerization promoters in the cationic dispersion, with carboxylic acid functional polymerizable monomers.

2. A method of synthesizing polyurethane/oligomeric urethane by radiation according to claim 1, wherein the radiation is an ultraviolet radiation.

3. A method of synthesizing polyurethane/oligomeric urethane by radiation according to claim 1, comprising the step of obtaining carboxylic acid functional polyols by carrying out esterification reactions between the water-insoluble polyol and di-functional activated carboxylic acid derivatives which are di-anhydrates.

4. A method of synthesizing polyurethane/oligomeric urethane by radiation according to claim 1, comprising the steps of; using polyols, monohydroxy functional polymerizable monomers and di-isocyanate; forming urethane bonds by using the catalytic effect of carboxylic acid groups of the polyols in the reaction between isocyanate and hydroxy groups; in the polymerization reaction, obtaining catalyst- and solvent-free, radiation-curable anionic polyurethane dispersion by monohydroxy functional monomers which act as chain growth inhibitors by reacting with di-functional isocyanate and converting of all components into well-defined polymerizable forms.

5. A method of synthesizing polyurethane/oligomeric urethane by radiation according to claim 1, comprising the step of synthesizing a radiation-curable anionic polyurethane dispersion by using a photoinitiator as a post-reaction additive in a catalyst-free polyurethane system or by replacing some of the hydroxy-functional polymerizable monomers with hydroxy-functional photoinitiators and attaching the photoinitiators to the main polymeric structure.

6. A method of synthesizing polyurethane/oligomeric urethane by radiation according to claim 1, comprising the step of obtaining a radiation-curable cationic polyurethane dispersion free of catalysts and solvents by using water-insoluble polyols, di-isocyanate, hydroxy-functional polymerizable monomers and hydroxy-functional tertiary amines.

7. A method of synthesizing polyurethane/oligomeric urethane by radiation according to claim 1, comprising the step of increasing the reactivity of all compositions by evaporation the water content of the dispersion under ultraviolet light exposure and obtaining a fast film formation without need for heat drying.

8. A method of synthesizing polyurethane/oligomeric urethane by radiation according to claim 3, comprising the step of adjusting the temperature in the esterification reaction with di-anhydride derivatives and polyols, preferably in the range between 90-140 °C for obtaining suitable carboxylic acid functional polyols.

9. A method of synthesizing polyurethane/oligomeric urethane by radiation according to claim 1, wherein the polyols are selected from di-hydroxy terminated polyesters, polycaprolactone, polycarbonates, polyether's, polydimethylsiloxanes, polyethylene's, polybutadienes and similar polyol derivatives a molecular weight in the range of about 1000 to about 100000 Dalton and a melting point lower than 100°C.

10. A method of synthesizing polyurethane/oligomeric urethane by radiation according to claim 3, wherein di-functional activated carboxylic acids are selected from Di-anhydride derivatives, 3,3',4,4'-Benzophenonetetracarboxylic dianhydride, 4,4'-Biphthalic Anhydride, 3,4,9,10-Perylenetetracarboxylic 3,4:9,10-dianhydride, Cyclobutane-1,2,3,4-tetracarboxylic dianhydride, 3,3',4,4'-Biphenyltetracarboxylic dianhydride, Benzophenone-3,3',4,4'-tetracarboxylic dianhydride, Bicyclo[2.2.2]oct-7-ene-2,3,5,6-tetracarboxylic dianhydride, 1,4,5,8-Naphthalenetetracarboxylic dianhydride, Tetrahydrofuran-2,3,4,5-tetracarboxylic Acid, Pyromellitic dianhydride, Perylene-3,4,9,10-tetracarboxylic dianhydride, 4,4'-Oxydiphthalic anhydride, 4,4'-(4,4'-lsopropylidenediphenoxy)bis(phthalic anhydride), and all related di-anhydride derivatives.

11. A method of synthesizing polyurethane/oligomeric urethane by radiation according to claim 3, comprising the step of adjusting the molar ratio of polyol and di-anhydride derivatives in mol Hydroxy: mol Anhydride equal to about 2 or less.

12. A method of synthesizing polyurethane/oligomeric urethane by radiation according to claim 4, wherein di-isocyanate functional agents are selected from Hexamethylene diisocyanate, Isophorone diisocyanate, Toluene 2,4-diisocyanate, 1,3-Phenylene diisocyanate, Diphenylmethane 4,4'-diisocyanate, Tolylene-2,4-diisocyanate, Tolylene-2,6-diisocyanate, 1,4-Phenylene diisocyanate, m-Xylylene diisocyanate, trans-1,4-Cyclohexylene diisocyanate, Poly(propylene glycol), tolylene 2,4-diisocyanate terminated, 3,3'-Dimethyl-4,4'-Biphenyl Diisocyanate, 1,4-Diisocyanatobutane, 1,12-Diisocyanatododecane, Tolylene-2,6-diisocyanate, 2-Methyl-m-phenylene diisocyanate, 1,3-Bis(1-isocyanato-1-methylethyl)benzene, 1,3-Bis(isocyanatomethyl) cyclohexane and all related di-isocyanate and di-isocyanate functional polymer derivatives.

13. A method of synthesizing polyurethane/oligomeric urethane by radiation according to claim 1, comprising the step of adding ultraviolet active components for obtaining polymerizable structures in the anionic and cationic ultraviolet curable polyurethane dispersions.

14. A method of synthesizing polyurethane/oligomeric urethane by radiation according to claim 13, wherein the ultraviolet active components were selected from hydroxy functional polymerizable monomers such as Hydroxyethyl acrylate, Hydroxyethyl methacrylate, N-Hydroxyethyl acrylamide, N-Hydroxyethyl metacrylamide, 2-hydroxypropyl acrylate, 2-hydroxypropyl methacrylate, Hydroxypropyl acrylate Hydroxypropyl methacrylate, 3-Phenoxy 2 hydroxy propyl methacrylate, 3-Phenoxy 2 hydroxy propyl acrylate, Glycerol monomethacrylate, Glycerol monoacrylate, N-(2-Hydroxypropyl)methacrylamide, N-(2-Hydroxypropyl) acrylamide, 4-hydroxybutyl acrylate, 4-hydroxybutyl methacrylate and all related mono, di or multi acrylate/methacrylate and mono hydroxy functional polymerizable monomers.

15. A method of synthesizing polyurethane/oligomeric urethane by radiation according to claim 5, wherein the photoinitiator are selected from Michler's ketone, anthraquinone, acridine, phenazine, benzophenone, Rose Bengal, Eosine, Erythrosine, Hexaarylbiimidazole, p-dialkylamino benzylidene ketone, 3-ketocoumarin, 4-thiazolidinone, 1-indanone, Riboflavin, Eosin-Y, Carboxylated Camphorquinone Acetophenone, Anisoin, Anthraquinone, Anthraquinone-2-sulfonic acid, sodium salt monohydrate, (Benzene) tricarbonylchromium, Benzil, Benzoin, Benzoin ethyl ether, Benzoin isobutyl ether, Benzoin methyl ether, Benzophenone, Benzophenone/1-Hydroxycyclohexylphenyl ketone, 1-Hydroxycyclohexyl phenyl ketone, 3,3',4,4'-Benzophenonetetracarboxylic dianhydride, 4-Benzoylbiphenyl, 2-Benzyl-2-(dimethylamino)-4'-morpholinobutyrophenone, 4,4'-Bis(diethylamino)benzophenone, 4,4'-Bis(dimethylamino)benzophenone, Camphorquinone, 2-Chlorothioxanthen-9-one, (Cumene) cyclopentadienyliron(ll) hexafluorophosphate, Dibenzosuberenone, 2,2-Diethoxyacetophenone, 4,4'-Dihydroxybenzophenone, 2,2-Dimethoxy-2-phenylacetophenone, 4-(Dimethylamino)benzophenone, 4,4'-Dimethylbenzil, 2,5-Dimethylbenzophenone, 3,4-Dimethylbenzophenone, Diphenyl(2,4,6trimethylbenzoyl)phosphine oxide / 2-Hydroxy-2-methylpropiophenone, 4'-Ethoxyacetophenone, Diphenyl(2,4,6 trimethylbenzoyl)phosphine oxide, Ethylanthraquinone, Ferrocene, 3'-Hydroxyacetophenone, 4'-Hydroxyacetophenone, 3-Hydroxybenzophenone, 4-Hydroxybenzophenone, 1-Hydroxycyclohexyl phenyl ketone, 2-Hydroxy-2-methylpropiophenone, 2-Hydroxybenzophenone, 3-Methylbenzophenone, Methybenzoylformate, 2-Methyl-4'-(methylthio)-2-morpholinopropiophenone, Phenanthrenequinone, 4'-Phenoxyacetophenone, Thioxanthen-9-one, Triarylsulfonium hexafluoroantimonate salts, Triarylsulfonium hexafluorophosphate salts, 2-Hydroxy-2-methyl-1- phenyl-1-propanone, 2-Hydroxy-1-[4-(2-hydroxyethoxy)phenyl]-2-methyl-1-propanone, Methylbenzoylformate, oxy-phenyl-acetic acid 2-[2 oxo-2 phenyl-acetoxy-ethoxy]-ethyl ester and oxy-phenyl-acetic 2-[2-hydroxy-ethoxy]-ethyl ester, Alpha, alpha-dimethoxy- alpha-phenylacetophenone, 2-Benzyl-2-(dimethylamino)-1-[4- (4-morpholinyl) phenyl]-1-butanone, 2-Methyl-1-[4-(methylthio)phenyl]-2-(4-morpholinyl)-1-propanone, Diphenyl (2,4,6-trimethylbenzoyl)- phosphine oxide, Phosphine oxide, phenyl bis (2,4,6-trimethyl benzoyl), Bis (eta 5-2,4-cyclopentadien-1-yl) Bis [2,6-difluoro-3-(1H-pyrrol-1-yl) phenyl]titanium, lodonium, (4-methylphenyl) [4-(2-methylpropyl) phenyl]- hexafluorophosphate(1-) and all possible mixture of photoinitiator and their modifications.

16. A method of synthesizing polyurethane/oligomeric urethane by radiation according to claim 1, wherein the neutralizations are accomplished with polymerizable tertiary amine, carboxylic acids or other acids/bases, 2-N-Morpholinoethyl methacrylate, 2-N-Morpholinoethyl acrylate, 2-Diisopropylaminoethyl methacrylate, 2-Diisopropylaminoethyl acrylate, N-[3-(N,N-Dimethylamino)propyl] methacrylamide, N-[3-(N,N-Dimethylamino)propyl] acrylamide, N-[2-(N,N-Dimethylamino)ethyl] methacrylamide, N-[2-(N,N-Dimethylamino)ethyl] acrylamide, 2-(N,N-Dimethylamino)ethyl acrylate, 2-(N,N-Dimethylamino)ethyl methacrylate, 2-(N,N-Diethylamino)ethyl methacrylate, 2-(N,N-Diethylamino)ethyl acrylate, 2-(tert-Butylamino)ethyl methacrylate, 2-(tert-Butylamino)ethyl acrylate, 2-(N,N-Dimethylamino)ethyl methacrylate, 2-(N,N-Dimethylamino)ethyl acrylate, Beta-Carboxyethyl Acrylate, Beta-Carboxyethyl methacrylate, 2-Sulfoethyl methacrylate, 2-Sulfoethyl acrylate, Acrylic acid, Methacrylic acid, Phosphorus-Based Poly(meth)acrylates and all related monomers.
